# EUROPÄISCHE PATENTSCHRIFT

(11) **EP 3 662 758 B1**
(45) Veröffentlichungstag und Bekanntmachung des Hinweises auf die Patenterteilung: **04.08.2021**
(21) Anmeldenummer: 19211084.9
(22) Anmeldetag: 25.11.2019
(51) Int. Cl.: A23G 1/00

(54) **VERFAHREN ZUR HERSTELLUNG EINER PRODUKTMASSE**
METHOD FOR MANUFACTURING A PRODUCT MASS
PROCÉDÉ DE FABRICATION D'UNE MASSE DE PRODUIT

(30) Priorität: 03.12.2018 DE 102018009471
(43) Veröffentlichungstag der Anmeldung: 10.06.2020
(73) Patentinhaber: NETZSCH-Feinmahltechnik GmbH, 95100 Selb (DE)
(72) Erfinder: Harbs, Theron, 95100 Selb (DE)

(56) Entgegenhaltungen:
- WO-A1-2005/077197
- DE-A1- 3 512 764
- DE-A1-102010 049 680

## Beschreibung

Die Erfindung betrifft ein Verfahren zur Herstellung einer Produktmasse als Grundmasse für Lebensmittel.

Derartige Produktmassen, insbesondere Schokoladenmassen, werden während ihrer Herstellung oftmals in einer Conchiervorrichtung (auch Conche genannt) conchiert. Ein solches Conchieren ist ein zentraler Prozessschritt, der die Qualität und den Geschmack des Endprodukts maßgeblich bestimmen kann. Bestandteile der Produktmasse werden beim Conchieren in einer dem Fachmann bekannten Weise vermengt und unter Einwirkung von Kompressions- und/oder Scherkräften bearbeitet. Beispielsweise im Fall der Schokoladenherstellung erlaubt es das Conchieren, einer Grundmasse, die zum Beispiel Kakaomasse, Zucker, Kakaobutter und Milchpulver enthält, Feuchtigkeit und andere unerwünschte Stoffe wie beispielsweise Essigsäure oder Aldehyde zu entziehen.

Auch bei Verwendung moderner Conchiervorrichtungen stellt das Conchieren einen zeitintensiven Prozessschritt dar, der nicht zuletzt aufgrund der ausgeprägten Krafteinwirkung auf die zu conchierende Masse mit einem hohen Energiebedarf einhergeht. Wird das Conchieren nicht sorgfältig durchgeführt und wird die Feuchtigkeit der Grundmasse nicht hinreichend gesenkt, können Zuckerkristalle in der Grundmasse verbleiben, die deren geschmackliche und rheologische Eigenschaften beeinträchtigen. Selbiges gilt für Säuren und andere unerwünschte Stoffe, die durch unzureichendes Conchieren in der Grundmasse verbleiben. Allerdings kann das Conchieren nicht beliebig lange durchgeführt werden, weil die mit dem Conchieren einhergehende Temperaturerhöhung sonst zur Entwicklung karamellartiger Geschmacksnoten führt, die insbesondere im Bereich von Milchschokoladen unerwünscht sind und vom Verbraucher typischerweise als Zeichen minderer Qualität wahrgenommen werden.

Es hat sich gezeigt, dass Feuchtigkeit der Grundmasse deutlich rascher entzogen werden kann, wenn ein sogenanntes Trockenconchieren angewandt wird, bei dem zunächst eine Teilmasse conchiert wird, die einen geringeren Fettanteil aufweist als die finale Produktmasse. Nach dem Trockenconchieren sind die Eigenschaften der Teilmasse jedoch sowohl in Bezug auf ihren Geschmack als auch in Bezug auf ihre Viskosität nicht zufriedenstellend. Daher wird im Anschluss an das Trockenconchieren ein sogenanntes Verflüssigen durchgeführt, indem fetthaltige Bestandteile wie beispielsweise Kakaobutter oder andere Fette mit der Teilmasse vermischt werden. Aus Kostengründen und nicht zuletzt im Hinblick auf einen möglichst niedrigen Fettgehalt der Produktmasse und somit des letztlich hergestellten Lebensmittels ist es dabei erstrebenswert, fetthaltige Bestandteile einzusparen. Um im Hinblick auf Geschmack und Mundgefühl befriedigende rheologische Eigenschaften wie insbesondere eine niedrige Viskosität erzielen zu können, sind derartigen Einsparungen jedoch Grenzen gesetzt.

Dokument WO2005/077197 offenbart ein Verfahren zur Herstellung von Schokoladenmasse, unter Verwendung einer Conchiervorrichtung, umfassend zwei Conchieren Schritte.

Der Erfindung liegt daher die Aufgabe zugrunde, ein Verfahren bereitzustellen, das die kostengünstige Herstellung einer Produktmasse, insbesondere einer Schokoladenmasse, hoher Qualität erlaubt, insbesondere im Hinblick auf die rheologischen Eigenschaften der Produktmasse.

Diese Aufgabe wird erfindungsgemäß durch ein Verfahren mit den Merkmalen des Anspruchs 1 gelöst. Weiterbildungen der Erfindung sind in den abhängigen Ansprüchen angegeben.

Erfindungsgemäß wird ein Verfahren zur Herstellung einer Produktmasse mit mehreren Bestandteilen und einem Rezepturgesamtfettgehalt unter Verwendung einer Conchiervorrichtung mit einem Conchierbehälter vorgeschlagen, der geöffnet und hermetisch dicht geschlossen werden kann. Das Verfahren umfasst ein Befüllen des Conchierbehälters mit einer fettarmen Teilmasse, die zumindest einen Teil der mehreren Bestandteile umfasst und die einen prozentualen Fettgehalt hat, der geringer als der Rezepturgesamtfettgehalt ist. Das Verfahren umfasst ferner ein erstes Conchieren der fettarmen Teilmasse bei geschlossenem Conchierbehälter und ein zweites Conchieren der fettarmen Teilmasse bei geöffnetem Conchierbehälter unter gleichzeitiger aktiver Trocknung der fettarmen Teilmasse. Vor dem zweiten Conchieren umfasst das Verfahren ein Zugeben eines weiteren Teils der mehreren Bestandteile zu der fettarmen Teilmasse bis zum Erreichen eines Fettgehalts im Bereich von etwa 11% bis etwa 17%. Des Weiteren umfasst das Verfahren ein Verflüssigen der Teilmasse unter Hinzugabe der restlichen der mehreren Bestandteile und Vermischen derselben mit der fettarmen Teilmasse zur Bildung einer die Produktmasse darstellenden Gesamtmasse, die zumindest im Wesentlichen den Rezepturgesamtfettgehalt aufweist.

Insbesondere zur Herstellung von Schokoladenmasse wird typischerweise Milchpulver verwendet, sodass in der entsprechenden Produktmasse bzw. in deren Bestandteilen Laktose vorhanden ist. Diese liegt in den meisten Fällen zumindest teilweise in amorphem Zustand vor, in welchem die Laktose im Milchpulver enthaltene Fette bindet. Milchpulver mit ausschließlich kristalliner Laktose hingegen hat in den meisten Fällen einen deutlichen Karamellgeschmack, der wie bereits erwähnt unerwünscht ist. Durch gezieltes Kristallisieren der amorphen Laktose während des ersten Conchierens wird erreicht, dass das zuvor in der amorphen Laktose gebundene Fett freigegeben wird. Um die amorphe Laktose zu kristallisieren, muss eine gewisse Menge an Feuchtigkeit in der fettarmen Teilmasse vorhanden sein. Falls erforderlich erfolgt deshalb vor dem ersten Conchieren der fettarmen Teilmasse eine Zugabe von wenigstens 0,5 Gew.-% (bezogen auf die Gesamtmasse der jeweiligen Rezeptur) eines polaren Lösungsmittels zu der fettarmen Teilmasse. Insbesondere handelt es sich bei dem polaren Lösungsmittel um Wasser. In Kombination mit dem anschließenden zweiten Conchieren unter gleichzeitiger aktiver Trocknung kann sodann trotz der zuvor gegebenenfalls erfolgten Zugabe von Feuchtigkeit in hinreichend kurzer Zeit und mit einem hohen Grad an Energieeffizienz die fettarme Teilmasse derart getrocknet werden, dass eine Produktmasse hoher Qualität erhalten werden kann. Das zweite Conchieren erlaubt zudem ein wirksames Entsäuern der fettarmen Teilmasse. Aufgrund des durch die Kristallisation der Laktose freigegebenen Fettes kann die Menge an fetthaltigen Bestandteilen, die zum Verflüssigen der Teilmasse hinzugegeben werden, vorteilhaft verringert werden, wodurch beispielsweise Kakaobutter oder andere Fette eingespart werden können. Auf diese Weise kann trotz eines vergleichsweise geringen Fettanteils eine Produktmasse mit optimierten rheologischen Eigenschaften und insbesondere mit einer niedrigen Viskosität hergestellt werden, wozu herkömmlich größere Mengen an hinzugefügtem Fett erforderlich waren. Da die aktive Trocknung zügig und dennoch schonend durchgeführt werden kann, kann ein Verklumpen der fettarmen Teilmasse vermieden werden, wie es bei zu hohen Temperaturen und/oder sehr langen Trockenconchierzeiten auftreten kann. Außerdem kann eine Produktmasse mit ausgeprägtem Milchgeschmack erzielt werden, da die Bildung von Karamellaromen erfindungsgemäß vermieden werden kann.

Die Produktmasse kann eine kakaobasierte Grundmasse für Lebensmittel sein, insbesondere eine Schokoladenmasse. Allgemein kann es sich um eine auf Fettmassen basierende Produktmasse handeln, die beispielsweise zur Herstellung von Genussmitteln verwendbar ist. Das Verfahren ist grundsätzlich für Produktmassen einsetzbar, für die ein Conchieren vorteilhaft ist und die insbesondere Milchpulver enthalten, beispielsweise für Milchcremes, Pralinenmassen oder dergleichen. Die Produktmasse ist dabei von reinem Milchpulver verschieden. Die mehreren Bestandteile umfassen insbesondere Kakaomasse, Zucker (auch und insbesondere nicht vorgemahlener Zucker, beispielsweise Kristallzucker), Kakaobutter, Milchpulver und/oder Fett.

Die Conchiervorrichtung ist gemäß einer Ausführungsform eine Rundconche mit einem Conchierwerkzeug, das um eine Drehachse in einer Umlaufrichtung drehbar ist. Der Conchierbehälter kann wenigstens einen Auslass aufweisen, der wahlweise geöffnet und geschlossen werden kann und beispielsweise zu einem Abluftsystem und/oder in eine Umgebung führt.

Der Fettgehalt der fettarmen Teilmasse ist vorzugsweise so eingestellt, dass es sich bei dem ersten und dem zweiten Conchieren um ein Conchieren gemäß dem Konzept eines Trockenconchierens handelt. Unter Trockenconchieren wird im Rahmen der vorliegenden Erfindung ein Conchieren einer Masse mit relativ geringem Fettanteil verstanden. Mit anderen Worten, der Fettgehalt der fettarmen Teilmasse ist deutlich niedriger als der Rezepturgesamtfettgehalt und kann beispielsweise um wenigstens ein Zehntel, wenigstens um ein Fünftel, wenigstens um ein Viertel, wenigstens um ein Drittel oder sogar um wenigstens die Hälfte des Rezepturgesamtfettgehalts niedriger sein als der Rezepturgesamtfettgehalt. Die fettarme Teilmasse kann erfindungsgemäß zumindest Kristallzucker und Milchpulver umfassen, beispielsweise bereits wenigstens einen Großteil des Milchpulvers, wie beispielsweise wenigstens 80 % oder wenigstens 90 %, und mindestens etwa 25% des Kristallzuckers, die in der verflüssigten Gesamtmasse vorhanden sein sollen. Erfindungsgemäß kann vorteilhaft eine Rezeptur verwendet werden, bei der das Milchpulver überwiegend oder sogar ausschließlich amorphe Laktose enthält. Beispielsweise können wenigstens 70 %, wenigstens 80 %, wenigstens 90 % oder wenigstens 95 % der im Milchpulver vorhandenen Laktose in amorphem Zustand vorliegen. Da das erfindungsgemäße Verfahren ein Entstehen von Karamellnoten wirksam verhindern kann, kann hierdurch eine Produktmasse mit ausgeprägtem Milchgeschmack bereitgestellt werden, wie sie insbesondere von Verbrauchern als qualitativ hochwertig wahrgenommen wird.

Erfindungsgemäß kann sofern benötigt auch eine größere Menge an polarem Lösungsmittel zugegeben werden, beispielsweise wenigstens 0,7 Gew.-%, wenigstens 1,0 Gew.-%, wenigstens 1,2 Gew.-% oder sogar wenigstens 1,5 Gew.-%. Die Angabe Gew.-% bezieht sich für das polare Lösungsmittel dabei wiederum auf die Gesamtmasse der Rezeptur. Bei dem polaren Lösungsmittel handelt es sich vorteilhaft um Trinkwasser, wobei auch wässrige Lösungen und/oder deionisiertes Wasser verwendet werden können. Zudem ist es erfindungsgemäß auch möglich, zumindest im Wesentlichen wasserfreie polare Lösungsmittel wie beispielsweise Ethanol zu verwenden, wobei vorzugsweise Lösungsmittel eingesetzt werden, die ein Kristallisieren von Laktose in der fettarmen Teilmasse bewirken und vorteilhaft geschmacksneutral sind.

Das erste Conchieren und/oder das zweite Conchieren können bei einer relativ zu einer Raumtemperatur erhöhten Temperatur durchgeführt werden. Die erhöhte Temperatur kann durch Reibungswärme beim Conchieren entstehen. Vorzugsweise weist die Conchiervorrichtung jedoch eine Heizeinrichtung auf, die ein gezieltes Erwärmen der zu conchierenden Masse ermöglicht. In einem geschlossenen Zustand des Conchierbehälters kann dieser derart abgedichtet sein, dass bei dem ersten Conchieren zumindest im Wesentlichen keine Feuchtigkeit aus dem Conchierbehälter austritt und somit eine relative Feuchtigkeit der fettarmen Teilmasse während des ersten Conchierens zumindest im Wesentlichen konstant bleibt. Dies ist wichtig, damit das erfindungsgemäß angestrebte Kristallisieren der amorphen Laktose stattfinden kann. Während des zweiten Conchierens hingegen kann, in einem geöffneten Zustand des Conchierbehälters, Luft und somit auch Luftfeuchtigkeit aus dem Conchierbehälter in eine Umgebung abgeführt werden, sodass ein Trocknen der fettarmen Teilmasse ermöglicht bzw. die relative Feuchtigkeit der fettarmen Teilmasse verringert wird.

Die aktive Trocknung der fettarmen Teilmasse unterscheidet sich insbesondere von einem bloßen Conchieren bei geöffnetem Conchierbehälter. Die aktive Trocknung kann beispielsweise eine im Vergleich zu Prozessvorgängen während des ersten Conchierens erhöhte Energiezufuhr umfassen, die zu einer erhöhten Temperatur der fettarmen Teilmasse führt. Ferner kann die aktive Trocknung ein Absaugen und/oder ein Verbinden eines Innenraums des Conchierbehälters mit einer Unterdruckleitung beinhalten, wodurch Feuchtigkeit rascher abgeführt wird. Zudem ist erfindungsgemäß denkbar, dass eine wasserdurchlässige Membran und/oder hygroskopisches Material für die aktive Trocknung verwendet werden.

Gemäß einer bevorzugten Ausführungsform umfasst die aktive Trocknung ein zumindest zeitweises Einleiten eines Trocknungsgases in den Conchierbehälter während des zweiten Conchierens. Hierdurch kann die aktive Trocknung in besonders effizienter Weise durchgeführt werden. Das Trocknungsgas kann dabei einen gegenüber einem Umgebungsdruck erhöhten Druck aufweisen, sodass es sich mit anderen Worten um ein Druckgas handelt. Beispielsweise kann der Druck um wenigstens 0,05 bar, um wenigstens 0,1 bar, um wenigstens 0,2 bar oder sogar um einen noch größeren Wert über dem Umgebungsdruck liegen.

Vor dem zweiten Conchieren erfolgt erfindungsgemäß die Zugabe eines weiteren Teils der mehreren Bestandteile zu der fettarmen Teilmasse. Insbesondere wird durch diese Zugabe eines weiteren Teils der mehreren Bestandteile sichergestellt, dass der Fettgehalt der fettarmen Teilmasse in einem Bereich von etwa 11% bis etwa 17% liegt. Bei einem Fettgehalt im genannten Bereich kann das zweite Conchieren besonders effektiv erfolgen. Beispielsweise handelt es sich bei dem weiteren Teil der mehreren Bestandteile um Kakaomasse. Insbesondere wird erfindungsgemäß vor dem zweiten Conchieren die gesamte Kakaomasse oder zumindest ein Großteil der Kakaomasse einer Rezeptur zugegeben (sofern in der Rezeptur Kakaomasse enthalten ist).

Bei dem Verflüssigen werden insbesondere die restlichen Bestandteile der mehreren Bestandteile der Produktmasse in den Conchierbehälter eingefüllt, die zuvor noch nicht eingefüllt wurden. Bei diesen restlichen Bestandteilen handelt es sich beispielsweise um Fett, insbesondere Kakaobutter, sowie gegebenenfalls um Aromen, Additive, Emulgatoren und dergleichen. Die fettarme Teilmasse und die restlichen Bestandteile bilden gemeinsam die Gesamtmasse. Anders ausgedrückt weisen die restlichen Bestandteile im Vergleich zu der fettarmen Teilmasse einen deutlich höheren Fettgehalt auf. Die Gesamtmasse kann somit bis auf tolerierbare, geringe Abweichungen den Rezepturgesamtfettgehalt aufweisen. Der Rezepturgesamtfettgehalt kann insbesondere durch die Wahl der übrigen Bestandteile und deren Dosierung mit einer gewünschten Toleranzbreite eingestellt werden.

Gemäß einer Weiterbildung der Erfindung wird die fettarme Teilmasse beim ersten Conchieren in eine Umlaufrichtung umgewälzt. Hierbei kann es sich um die Umlaufrichtung des oben erwähnten Conchierwerkzeugs handeln. Das Trocknungsgas wird dabei vorzugsweise zumindest im Wesentlichen tangential zu der Umlaufrichtung in den Conchierbehälter eingeleitet. Hierdurch wird eine Durchmischung der fettarmen Teilmasse sowie ein Austragen von Bitterstoffen intensiviert. Zudem wird aufgrund des vorzugsweise tangentialen Zuführens das Trocknungsgas besonders wirksam in dem Conchierbehälter verteilt. Anders ausgedrückt wird das Trocknungsgas vorzugsweise zumindest im Wesentlichen tangential zu einer Umlaufbahn der fettarmen Teilmasse und/oder des Conchierwerkzeugs in den Conchierbehälter eingeleitet. Das Trocknungsgas kann auch zumindest im Wesentlichen tangential zu einer Behälterinnenwand des Conchierbehälters in diesen eingeleitet werden. Das Trocknungsgas kann in einer Zuführrichtung in den Conchierbehälter eingeleitet werden. Die Zuführrichtung umfasst dabei eine tangential zu der Umlaufrichtung verlaufende Vektorkomponente. Der Begriff "zumindest im Wesentlichen tangential" umfasst hierbei insbesondere auch Fälle, in denen die Zuführrichtung zusätzlich eine quer zu der tangentialen Vektorkomponente verlaufende Vektorkomponente umfasst, welche jedoch deutlich kleiner ist als die tangentiale Vektorkomponente, insbesondere wenigstens um einen Faktor zwei, wenigstens um einen Faktor drei, wenigstens um einen Faktor fünf oder sogar wenigstens um einen Faktor zehn kleiner.

Erfindungsgemäß kann durch das tangentiale Zuführen des Trocknungsgases die fettarme Teilmasse gezielt und mit einer kontrollierten Temperatur aktiv getrocknet werden, wodurch ein schnelles und zugleich schonendes Trocknen der fettarmen Teilmasse ermöglicht wird. Die Conchiervorrichtung kann wenigstens einen Zuführkanal aufweisen, durch welchen das Trocknungsgas dem Conchierbehälter zuführbar ist. Ein Auslass des Zuführkanals, der einen Einlass des Conchierbehälters bildet, kann dabei oberhalb oder unterhalb eines Sollpegels für die fettarme Teilmasse angeordnet sein. Der Auslass des Zuführkanals kann düsenartig ausgestaltet sein.

Gemäß einer Ausführungsform der Erfindung wird als Trocknungsgas Heißluft verwendet. Heißluft ist einfach, kostengünstig und in gut kontrollierbarer Weise erzeugbar.

Die fettarme Teilmasse weist in der Regel auch vor dem Zugeben des polaren Lösungsmittels eine anfängliche relative Feuchtigkeit auf. Erfindungsgemäß wird vorgeschlagen, dass ein Zugeben des polaren Lösungsmittels zu der fettarmen Teilmasse erforderlichenfalls die anfängliche relative Feuchtigkeit der fettarmen Teilmasse erhöht, wobei das zweite Conchieren dann zu einer Verringerung der relativen Feuchtigkeit der fettarmen Teilmasse auf einen Wert unterhalb der anfänglichen Feuchtigkeit der fettarmen Teilmasse führt. Hierdurch wird eine Gesamtmasse erhalten, die nach dem ersten und dem zweiten Conchieren eine gewünschte niedrige relative Feuchtigkeit aufweist, obgleich zuvor gegebenenfalls das polare Lösungsmittel hinzugefügt wurde. Auf diese Weise kann zunächst die Laktose gezielt kristallisiert und gebundenes Fett freigesetzt werden, anschließend jedoch eine getrocknete fettarme Teilmasse mit vorteilhaft geringer Feuchte erhalten werden, die zu einer qualitativ hochwertigen Produktmasse mit günstigen rheologischen Eigenschaften weiterverarbeitet werden kann. Die anfängliche relative Feuchtigkeit kann beispielsweise wenigstens 0,5 Gew.-% oder wenigstens 1,0 Gew.-% und/oder höchstens 2,0 Gew.-%, insbesondere höchstens 1,5 Gew.-% betragen. Das Zugeben des polaren Lösungsmittels kann die relative Feuchtigkeit der fettarmen Teilmasse deutlich erhöhen. Beispielsweise kann die relative Feuchtigkeit der fettarmen Teilmasse durch das Zugeben des polaren Lösungsmittels wenigstens verdoppelt, wenigstens verdreifacht oder wenigstens vervierfacht werden. Insbesondere in Verbindung mit dem direkten und/oder tangentialen Einblasen des Trocknungsgases kann trotz einer vorübergehend deutlich erhöhten relativen Feuchtigkeit die relative Feuchtigkeit der fettarmen Teilmasse nach dem zweiten Conchieren auf übliche niedrige Werte gesenkt werden. Erfindungsgemäß ist hierfür dennoch weniger Zeit- und/oder Energieaufwand vonnöten als bisher.

Günstige rheologische Eigenschaften der Gesamtmasse, die insbesondere von Verbrauchern mit einem qualitativ hochwertigen Produkt in Verbindung gebracht werden, können insbesondere dann erzielt werden, wenn ein Feinzerkleinern der Gesamtmasse durchgeführt wird. Ein solches Feinzerkleinern wird im englischsprachigen Raum oftmals auch als "Refining" bezeichnet. Das Feinzerkleinern wird zum Beispiel nach einem Abkühlen der Gesamtmasse im Anschluss an das Verflüssigen durchgeführt. Bei dem Feinzerkleinern kann es sich um ein Mahlen handeln.

Eine Weiterbildung der Erfindung sieht vor, dass das Feinzerkleinern in einer Rührwerkskugelmühle durchgeführt wird. Der Begriff "Rührwerkskugelmühle" soll dabei auch solche Mühlen einschließen, deren Mahlkörper nicht kugelförmig sind. Die Erfinder haben erkannt, dass durch die Verwendung einer Rührwerkskugelmühle das Feinzerkleinern besonders wirksam vorgenommen werden kann. Mit einer Rührwerkskugelmühle kann eine Partikelgröße zeiteffizient noch weiter gesenkt werden. Auf ein zusätzliches Entfernen von Feuchtigkeit während des Feinzerkleinerns kann bei der vorliegenden Erfindung verzichtet werden kann, da das zweite Conchieren bereits ein äußerst wirksames Trocknen und Entsäuern der fettarmen Teilmasse erlaubt.

Das erfindungsgemäße Conchierverfahren hat den besonderen Vorteil, dass es ohne nachteilige Auswirkungen möglich ist, den Fettanteil nutzbar zu machen, der in Milchpulver durch amorphe Laktose gebunden ist. Es ist mit dem erfindungsgemäßen Verfahren daher möglich, die Viskosität einer Rezeptur deutlich abzusenken, ohne dass hierfür ein größerer Fettanteil als bisher üblich zugesetzt werden muss. Gegenüber herkömmlichen Conchierverfahren beträgt die mit dem erfindungsgemäßen Verfahren erreichte Viskositätssenkung 30%, 40% oder sogar 50% und mehr. Ist andererseits als Zielgröße eine bestimmte Viskosität einer Produktmasse vorgegeben, so kann diese Viskosität mit dem erfindungsgemäßen Verfahren mit einem geringeren Anteil hinzugegebenen Fetts als bisher üblich erreicht werden, da das erfindungsgemäße Verfahren den in der amorphen Laktose gebundenen Fettanteil freisetzt. Mit dem erfindungsgemäßen Verfahren kann auf diese Weise eine Einsparung von etwa 2 bis 3% Fett bezogen auf den gewünschten Fettanteil der Gesamtmasse erhalten werden, insbesondere eine Einsparung im Bereich von 2 bis 2,5% Fett und insbesondere von 2,3% Fett. Bei der großindustriellen Herstellung von beispielsweise Milchschokolade stellt eine solche Fetteinsparung einen erheblichen Kostenvorteil dar.

Mit anderen Worten erlaubt es das erfindungsgemäße Verfahren, entweder bei einem im Vergleich zu herkömmlichen Conchierverfahren gleichen Rezepturgesamtfettgehalt eine deutlich geringere Ziel- bzw. Endviskosität der Produktmasse zu erhalten oder eine gewünschte Endviskosität mit einem geringeren Rezepturgesamtfettgehalt als bisher üblich zu erreichen. In der Schokoladenindustrie beispielsweise ist eine bestimmte Ziel- oder Endviskosität der Produktmasse von großer Wichtigkeit, da die Endviskosität entscheidenden Einfluss auf die rheologischen Eigenschaften der Produktmasse hat, insbesondere auf deren Fließfähigkeit, und somit auf die Möglichkeiten der Weiterverarbeitung. Überzugsmassen etwa sollen in der Regel eine niedrigere Viskosität haben, damit sie flüssiger und damit besser fließfähig sind. Hingegen wird für backfeste Mischungen eine Schokoladenmasse mit höherer Viskosität bevorzugt, damit die Schokolade während des Backens nicht zu sehr zerfließt. Milchschokolade hat z.B. in der Regel eine Ziel- bzw. Endviskosität von etwa 3000 mPas.

Eine besonders wirksame Kristallisation von Laktose kann insbesondere dann erreicht werden, wenn die Teilmasse beim ersten Conchieren auf eine Temperatur von wenigstens 55 °C oder sogar von wenigstens 60 °C erhitzt wird. Es hat sich gezeigt, dass insbesondere bei Temperaturen über 55 °C die Kristallisation der Laktose und somit das Freigeben von in dem Milchpulver vorhandenem Fett sehr effizient ablaufen.

Beim zweiten Conchieren kann die Temperatur auf einen Wert über 60 °C oder über 65 °C erhöht werden, beispielsweise auf einen Wert von wenigstens 70 °C, wenigstens 80 °C oder wenigstens 85 °C. Hierdurch kann insbesondere das aktive Trocknen durch das Trocknungsgas wirkungsvoll unterstützt werden.

Erfindungsgemäß wird außerdem vorgeschlagen, dass ein Bestandteil der fettarmen Teilmasse Kristallzucker ist. Die Verwendung von Kristallzucker hat sich als vorteilhaft herausgestellt, da dieser weniger Wasser aufnimmt als gemahlener Zucker und daher ein deutlich effizienteres Trocknen während des zweiten Conchierens erlaubt. Erfindungsgemäß ist es möglich, dass die fettarme Teilmasse zumindest im Wesentlichen frei von gemahlenem Zucker wie etwa Puderzucker ist. Zum Beispiel kann ein Großteil oder sämtlicher zugesetzter Zucker in Form von Kristallzucker vorliegen.

Gemäß einer Variante wird das erste Conchieren über einen Zeitraum von wenigstens 0,5 h, insbesondere von wenigstens 1 h, und/oder von höchstens 3 h, insbesondere von höchstens 2 h, durchgeführt. Hierdurch kann ein vergleichsweise kurzer Prozessschritt bereitgestellt werden, der dennoch ein Kristallisieren von Laktose in erheblichem Umfang gestattet und so eine Freisetzung des in der amorphen Laktose gebundenen Fettes ermöglicht.

Die fettarme Teilmasse kann einen Fettgehalt von wenigstens 5 % und insbesondere von wenigstens 10 % und/oder von höchstens 25 % und insbesondere von höchstens 20 % aufweisen. Zum Beispiel kann der Fettgehalt der fettarmen Teilmasse zwischen 11 und 17 % liegen. Die vorgenannten Prozentangaben für den Fettgehalt der fettarmen Teilmasse verstehen sich einschließlich des durch amorphe Laktose gebundenen Fettanteils. Prozentangaben, die sich auf einen Fettgehalt beziehen, sind hierbei im Rahmen dieser Offenbarung insbesondere als Angaben in Gew.-% zu verstehen, jeweils bezogen auf die entsprechende Masse (beispielsweise bezogen auf die fettarme Teilmasse, die Gesamtmasse oder die Produktmasse).

Wie oben erwähnt wurde, kann ein Bestandteil der Produktmasse Kakaomasse sein. In einer Variante des erfindungsgemäßen Verfahrens wird vorgeschlagen, dass die fettarme Teilmasse beim ersten Conchieren im Wesentlichen frei von Kakaomasse ist. Die fettarme Teilmasse kann beispielsweise weniger als ein Fünftel, weniger als ein Sechstel, weniger als ein Siebtel oder sogar weniger als ein Zehntel der gesamten Kakaomasse umfassen. Die fettarme Teilmasse umfasst somit anders ausgedrückt anfänglich überwiegend oder lediglich die "weißen" Bestandteile der mehreren Bestandteile, wohingegen die Kakaobestandteile wie Kakaomasse und/oder Kakaobutter erst später hinzugegeben werden. Die Kakaomasse oder ein großer Anteil derselben wird vorteilhaft vor dem zweiten Conchieren zugegeben. Das erste und das zweite Conchieren erlauben auf diese Weise ein besonders effektives Trockenconchieren.

Somit können große Anteile an Kakaomasse bereits in der fettarmen Teilmasse vorhanden sein. In diesem Fall können für das erste und das zweite Conchieren zum Beispiel lediglich Fett und/oder Kakaobutter sowie Additive, Aromastoffe, Emulgatoren etc. weggelassen werden.

Kosten für fetthaltige Zutaten können insbesondere dann in erheblichem Umfang eingespart werden, wenn der Rezepturgesamtfettgehalt höchstens 34 %, insbesondere höchstens 32 % und vorteilhaft höchstens 29 % beträgt. Beispielsweise hat sich bei Versuchen gezeigt, dass für ein konventionelles Conchieren ein Rezepturgesamtfettgehalt von etwa 32 % erforderlich ist, um ähnliche rheologische Eigenschaften und insbesondere ähnliche Endviskositäten zu erzielen wie mit dem erfindungsgemäßen Verfahren bei einem Rezepturgesamtfettgehalt von etwa 29,5 %.

Weitere Vorteile und Wirkweisen der Erfindung ergeben sich für den Fachmann aus der nachfolgenden Beschreibung und der beigefügten Zeichnungen, in denen bevorzugte Ausführungsformen der Erfindung beispielhaft dargestellt sind. Es stellen dar:
- Figur 1: eine schematische Darstellung einer Conchiervorrichtung, die zum Durchführen eines erfindungsgemäßen Verfahrens verwendet wird;
- Figur 2: ein Ablaufschema des erfindungsgemäßen Verfahrens;
- Figur 3: ein beispielhaftes Diagramm, das einen zeitlichen Temperaturverlauf während des erfindungsgemäßen Verfahrens schematisch darstellt;
- Figur 4: ein beispielhaftes Diagramm, das einen zeitlichen Verlauf einer relativen Feuchtigkeit während des erfindungsgemäßen Verfahrens schematisch darstellt.

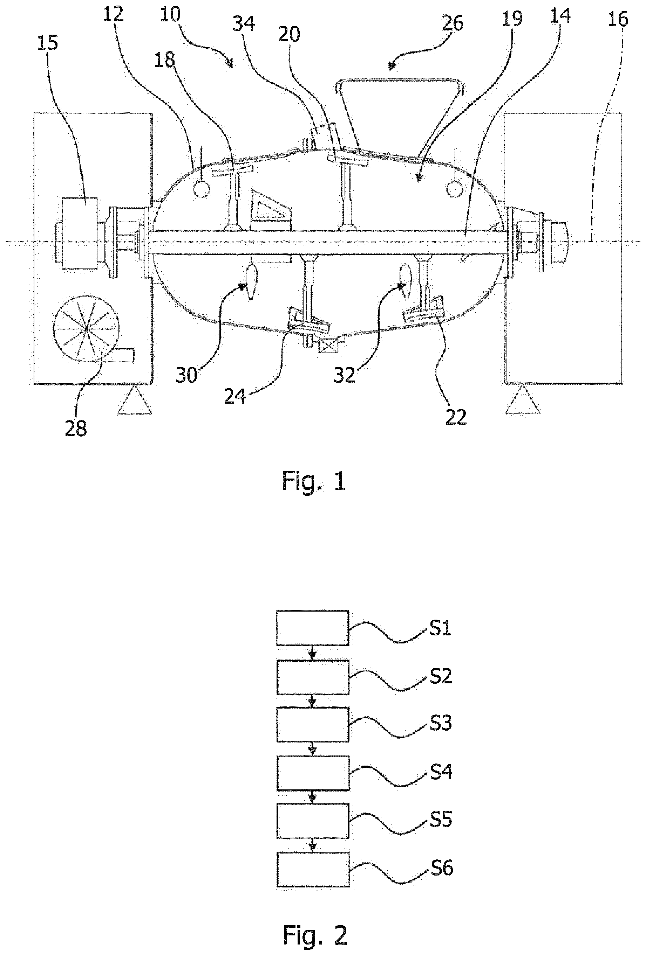

Die Figur 1 zeigt eine schematische Darstellung einer Conchiervorrichtung 10 mit einem Conchierbehälter 12, die zur Durchführung des erfindungsgemäßen Verfahrens verwendet werden kann. Die Conchiervorrichtung 10 umfasst eine Antriebswelle 14, die mit einer Antriebseinheit 15 der Conchiervorrichtung 10 verbunden ist. Die Antriebswelle 14 ist um eine Drehachse 16 drehbar gelagert. Die Antriebswelle tritt seitlich in den Conchierbehälter 12 ein. An der Antriebswelle 14 sind mehrere Conchierwerkzeuge 18-24 angebracht, die sich bei einer Drehung der Antriebswelle 14 mit dieser um die Drehachse 16 drehen. Die Conchierwerkzeuge 18-24 bewegen sich dabei in einer Umlaufrichtung auf einer nicht dargestellten Umlaufbahn, die kreisförmig um die Drehachse 16 umläuft. Ferner bewegen sich die Conchierwerkzeuge 18-24 hierbei entlang einer Behälterinnenwand 19. Die Conchiervorrichtung 10 hat zudem einen Einfülltrichter 26, der ein Einfüllen von Bestandteilen einer zu conchierenden Masse in den Conchierbehälter 12 erlaubt.

Die Conchiervorrichtung 10 weist ferner eine Gebläseeinheit 28 auf, die zur Erzeugung eines Stroms eines Trocknungsgases ausgebildet ist. Bei dem Trocknungsgas handelt es sich im dargestellten Fall um unter Druck gesetzte Heißluft. Die Gebläseeinheit 28 ist dazu eingerichtet, das Trocknungsgas mit einem Überdruck von etwa 0,1 bis 0,3 bar gegenüber einem Umgebungsdruck bereitzustellen.

Des Weiteren ist der Conchierbehälter 12 mit Einlässen 30, 32 versehen, die über nicht dargestellte Zuführkanäle mit der Gebläseeinheit 28 verbunden sind. Das Trocknungsgas kann durch die Einlässe 30, 32 in einen Innenraum des Conchierbehälters 12 eingeleitet werden. Die Einlässe 30, 32 sind derart angeordnet, dass das Trocknungsgas zumindest im Wesentlichen tangential zu der Umlaufrichtung der Conchierwerkzeuge 18-24 in den Conchierbehälter 12 eingeblasen wird. Das Trocknungsgas wird durch die Einlässe 30, 32 zumindest im Wesentlichen tangential zu der Behälterinnenwand 19 in den Conchierbehälter 12 eingeleitet.

Die Ausgestaltung mit Einlässen 30, 32 ist dabei beispielhaft zu verstehen. Der Fachmann wird auch alternative Ausgestaltungen in Betracht ziehen, bei denen beispielsweise eine oder mehrere Düsen verwendet werden, die ein gezieltes Richten eines in den Conchierbehälter 12 eingeleiteten Stroms des Trocknungsgases gestatten.

Zudem verfügt der Conchierbehälter 12 über einen Auslass 34, der geöffnet und geschlossen werden kann. Der Auslass 34 kann beispielsweise bei einem Einlassen von Trocknungsgas in den Conchierbehälter 12 geöffnet werden, sodass das Trocknungsgas sowie eventuell ausgetragene Stoffe und/oder verdampftes Lösungsmittel wie beispielsweise Wasser oder dergleichen aus dem Innenraum des Conchierbehälters 12 abgeführt werden können.

Die Figur 2 zeigt ein schematisches Ablaufdiagramm eines erfindungsgemäßen Verfahrens zur Herstellung einer Produktmasse als Grundmasse für Lebensmittel. Im dargestellten Ausführungsbeispiel ist die Produktmasse eine Schokoladenmasse, die mehrere Bestandteile umfasst. Bei diesen Bestandteilen handelt es sich im gezeigten Fall zumindest um Kristallzucker, Kakaomasse, Milchpulver und Kakaobutter. Die Produktmasse weist einen Rezepturgesamtfettgehalt auf, der sich aus dem jeweiligen Fettgehalt und dem jeweiligen Gewichtsanteil der mehreren Bestandteile der Produktmasse in deren hergestelltem Zustand ergibt. Der Rezepturgesamtfettgehalt kann beispielsweise etwa 29 % betragen. Der Rezepturgesamtfettgehalt liegt damit deutlich niedriger als bei bisher verwendeten Rezepturen für eine Produktmasse mit ähnlichen rheologischen Eigenschaften und insbesondere ähnlicher Endviskosität.

In einem ersten Verfahrensschritt S1 wird der Conchierbehälter 12 der Conchiervorrichtung 10 mit einer fettarmen Teilmasse befüllt, die zumindest einen Teil der mehreren Bestandteile umfasst und die einen Fettgehalt aufweist, der geringer als der Rezepturgesamtfettgehalt ist. In einer ersten Variante des Verfahrens ist die fettarme Teilmasse zumindest im Wesentlichen frei von Kakaomasse. Die fettarme Teilmasse enthält dann vor allem die "weißen" Bestandteile der Produktmasse. In einer zweiten Variante des Verfahrens kann hingegen die fettarme Teilmasse bereits Kakaomasse in beträchtlichem Umfang umfassen. In beiden Varianten enthält die fettarme Teilmasse Kristallzucker und Milchpulver, vorzugsweise sämtlichen Kristallzucker und sämtliches Milchpulver, der bzw. das in der hergestellten Produktmasse vorhanden sein sollen. Das Milchpulver enthält hierbei überwiegend oder sogar ausschließlich Laktose in amorpher Form. Die fettarme Teilmasse kann im dargestellten Beispiel als entfettete Schokoladenmasse beschrieben werden. Um den Fettgehalt der fettarmen Teilmasse deutlich niedriger als den Rezepturgesamtfettgehalt der Produktmasse einzustellen, enthält die fettarme Teilmasse im gezeigten Beispiel deutlich weniger Kakaobutter und/oder Fett als die Produktmasse. Der Fettgehalt der fettarmen Teilmasse liegt daher im gezeigten Beispiel zwischen 10 % und 20 % und kann je nach Rezeptur beispielsweise 15 % betragen.

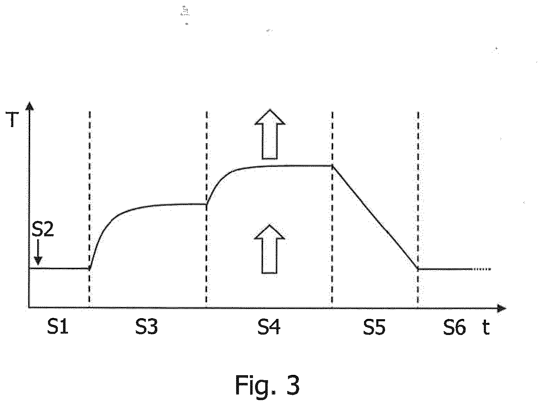

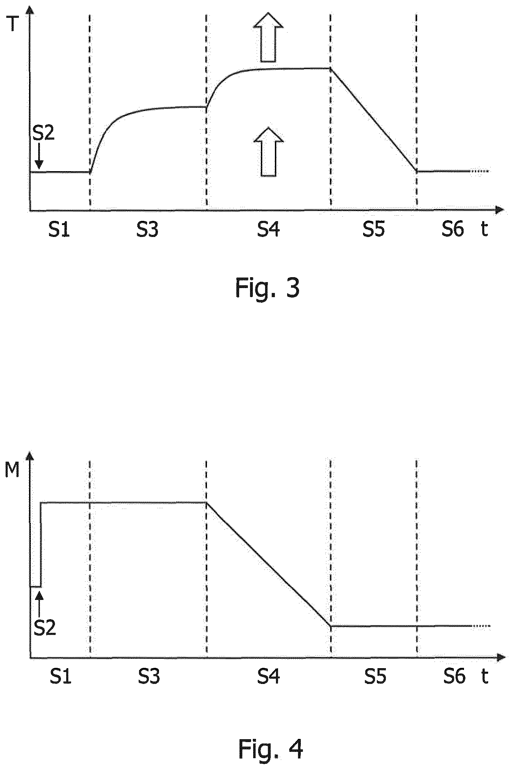

Im Folgenden wird zusätzlich auf die Figuren 3 und 4 Bezug genommen, die schematische Diagramme eines zeitlichen Temperaturverlaufs und eines zeitlichen Verlaufs einer relativen Feuchtigkeit der jeweils aktuell bearbeiteten Masse darstellen. Hierbei bezeichnet t Zeit, T die Temperatur und M die relative Feuchtigkeit (Englisch: "Moisture").

In einem zweiten Verfahrensschritt S2 wird ein polares Lösungsmittel in einer Menge von wenigstens 0,5 Gew.-% zu der fettarmen Teilmasse zugegeben. Bei dem polaren Lösungsmittel handelt es sich hier um Wasser. Je nach konkret verwendeter Rezeptur wird beispielsweise 1,0 Gew.-% oder 1,5 Gew.-% Wasser zugegeben. Das polare Lösungsmittel wird sodann mit der fettarmen Teilmasse vermischt. Wie im Diagramm der Figur 4 zu erkennen ist, steigt die relative Feuchtigkeit der fettarmen Teilmasse durch das Zugeben des polaren Lösungsmittels deutlich an. Die relative Feuchtigkeit der fettarmen Teilmasse wird im gezeigten Fall durch das Zugeben des polaren Lösungsmittels etwa verdoppelt oder verdreifacht.

In einem dritten Verfahrensschritt S3 wird der Conchierbehälter 12 geschlossen und es findet ein erstes Conchieren der fettarmen Teilmasse bei geschlossenem Conchierbehälter 12 statt. Das erste Conchieren wird dabei über einen Zeitraum von etwa 0,5 bis 3 h durchgeführt. Aufgrund des geschlossenen Zustands des Conchierbehälters 12 bleibt die relative Feuchtigkeit der fettarmen Teilmasse während des ersten Conchierens im Wesentlichen konstant (vgl. Figur 4). Aufgrund der vergleichsweise hohen relativen Feuchtigkeit der fettarmen Teilmasse während des ersten Conchierens kristallisiert die in der fettarmen Teilmasse vorhandene amorphe Laktose, wodurch im amorphen Zustand der Laktose gebunden vorliegendes Fett freigesetzt werden kann, das in dem Milchpulver vorhanden ist.

Die fettarme Teilmasse wird beim ersten Conchieren auf eine Temperatur von wenigstens 55 °C und insbesondere von wenigstens 60 °C erhitzt (vgl. Figur 3). Das Erhitzen erfolgt bei dem ersten Conchieren allmählich, was in der Figur 3 durch den Kurvenverlauf schematisch dargestellt ist. Der in der Figur 3 dargestellte zeitliche Verlauf ist jedoch als rein beispielhaft zu verstehen. Insbesondere kann eine Zieltemperatur für das erste Conchieren deutlich früher erreicht werden als dies die Figur 3 suggeriert.

Nach dem ersten Conchieren erfolgt eine Zugabe eines weiteren Teils der mehreren Bestandteile zu der fettarmen Teilmasse bis zum Erreichen eines Fettgehalts im Bereich von etwa 11% bis etwa 17%. Insbesondere wird jetzt die Kakaomasse oder ein großer Teil derselben zugegeben.

In einem vierten Verfahrensschritt S4 wird anschließend der Conchierbehälter 12 geöffnet und es erfolgt ein zweites Conchieren der fettarmen Teilmasse unter gleichzeitiger aktiver Trocknung der fettarmen Teilmasse. Im dargestellten Beispiel wird das zweite Conchieren über einen Zeitraum von einigen Stunden wie beispielsweise etwa 2 h oder etwa 4 h durchgeführt. Bei der aktiven Trocknung wird ein Trocknungsgas in den Conchierbehälter 12 eingeleitet. Dies ist durch den unteren Pfeil im Schritt S4 in der Figur 3 veranschaulicht. Das Trocknungsgas wird im gezeigten Ausführungsbeispiel durch die Gebläseeinheit 28 bereitgestellt. Als Trocknungsgas wird Heißluft eingesetzt. Das Trocknungsgas wird unmittelbar in die fettarme Teilmasse eingeblasen, während diese conchiert wird. Dabei wird das Trocknungsgas, wie oben beschrieben, zumindest im Wesentlichen tangential zu der Umlaufrichtung der Conchierwerkzeuge 18-24 und somit zumindest im Wesentlichen tangential zu einer Umlaufrichtung der umgewälzten fettarmen Teilmasse in den Conchierbehälter 12 eingeleitet.

Das zweite Conchieren wird bei einer höheren Temperatur durchgeführt als das erste Conchieren. Insbesondere steigt die Temperatur der fettarmen Teilmasse in dem Conchierbehälter 12 aufgrund der erhöhten Temperatur des zugeführten Trocknungsgases.

Da der Conchierbehälter 12 während des zweiten Conchierens geöffnet ist, kann Feuchtigkeit aus der fettarmen Teilmasse in einen Innenraum des Conchierbehälters 12 austreten und dann aus diesem abgeführt werden, beispielsweise in eine Abluftanlage oder in die Umgebung. Dies ist durch den oberen Pfeil im Schritt S4 in der Figur 3 veranschaulicht. Hierbei wird insbesondere auch das zugegebene polare Lösungsmittel aus der fettarmen Teilmasse zu wenigstens einem Großteil entfernt. Durch das aktive Trocknen wird die relative Feuchtigkeit der fettarmen Teilmasse auf einen Wert gesenkt, der unterhalb der relativen Feuchtigkeit der fettarmen Teilmasse vor Zugabe des polaren Lösungsmittels liegt, wie in der Figur 4 zu erkennen ist. Der in der Figur 4 dargestellte lineare Verlauf der abnehmenden relativen Feuchtigkeit ist dabei rein beispielhaft. Insbesondere zu Beginn und gegen Ende des zweiten Conchierens kann dieser Verlauf auch von einem linearen Verlauf abweichen.

In einem fünften Verfahrensschritt S5 wird die fettarme Teilmasse unter Hinzugabe der restlichen Bestandteile und unter Vermischen derselben mit der fettarmen Teilmasse zur Bildung einer die Produktmasse darstellenden Gesamtmasse verflüssigt, die zumindest im Wesentlichen den Rezepturgesamtfettgehalt aufweist. In dem fünften Verfahrensschritt S5 erfolgt somit eine Zugabe des beispielsweise für Milchcremes oder grundsätzlich für ein Verflüssigen der fettarmen Teilmasse noch fehlenden Fettanteils. Gemäß der ersten Variante des Verfahrens wird beim Verflüssigen außer Fett und Kakaobutter auch der noch nicht in der fettarmen Teilmasse vorhandene Anteil an Kakaomasse hinzugefügt. Gemäß der zweiten Variante des Verfahrens werden hingegen überwiegend Fett und/oder Kakaobutter zugegeben. Das Verflüssigen erfolgt hierbei in dem Conchierbehälter 12 und unter Abkühlen der fettarmen Teilmasse bzw. der Gesamtmasse, was auch in der Figur 3 schematisch dargestellt ist.

In einem sechsten Verfahrensschritt S6 wird die erhaltene Gesamtmasse einer nicht dargestellten Rührwerkskugelmühle zugeführt, mittels derer ein Feinzerkleinern der Gesamtmasse erfolgt. Hierbei wird eine Partikelgröße von in der verflüssigten Gesamtmasse vorhandenen Stoffen, wie beispielsweise eine Partikelgröße des Kristallzuckers und der kristallisierten Laktose, deutlich verringert. Eine Viskosität der nach dem Feinzerkleinern erhaltenen Produktmasse beträgt dann beispielsweise höchstens 4000 mPs und insbesondere höchstens 3500 mPs. Bedarfsweise kann eine noch geringere Viskosität erzielt werden, indem beim Verflüssigen mehr Fett zugegeben wird.

Je nach verwendeter Rezeptur ist für bestimmte Produktmassen auch denkbar, dass auf den Schritt eines Feinzerkleinerns vollständig verzichtet wird.

Einem Fachmann ist klar, dass einige der beschriebenen Merkmale und Verfahrensschritte in geeigneter Weise abgewandelt, wiederholt oder weggelassen werden können, beispielsweise um gezielt bestimmte gewünschte Eigenschaften einer Produktmasse zu erhalten. Wie oben erwähnt wurde sind zudem auch andere Arten der aktiven Trocknung denkbar. Außerdem ist das erfindungsgemäße Verfahren auch für Produktmassen anwendbar, bei denen es sich nicht um Schokoladenmasse handelt. Auch hierbei wird der Fachmann entsprechende Anpassungen des beschriebenen beispielhaften Verfahrens in geeigneter Weise vornehmen. Zudem wird der Fachmann erkennen, dass die dargestellte Conchiervorrichtung 10 lediglich ein mögliches Beispiel einer geeigneten Conchiervorrichtung darstellt und das erfindungsgemäß andere Geometrien, Conchierwerkzeuge und Anordnungen von Komponenten verwendet werden können.

## Patentansprüche

1. Verfahren zur Herstellung einer Produktmasse, insbesondere einer Schokoladenmasse, als Grundmasse für Lebensmittel, mit mehreren Bestandteilen und einem Rezepturgesamtfettgehalt unter Verwendung einer Conchiervorrichtung (10) mit einem Conchierbehälter (12), der geöffnet und hermetisch dicht geschlossen werden kann, umfassend die Schritte:
Befüllen (S1) des Conchierbehälters (12) mit einer fettarmen Teilmasse, die zumindest einen Teil der mehreren Bestandteile umfasst und die einen Fettgehalt aufweist, der geringer als der Rezepturgesamtfettgehalt ist;
erstes Conchieren (S3) der fettarmen Teilmasse bei geschlossenem Conchierbehälter (12);
Zugeben eines weiteren Teils der mehreren Bestandteile zu der fettarmen Teilmasse bis zum Erreichen eines Fettgehalts im Bereich von etwa 11% bis etwa 17%;
zweites Conchieren (S4) der fettarmen Teilmasse bei geöffnetem Conchierbehälter (12) unter gleichzeitiger aktiver Trocknung der fettarmen Teilmasse;
Verflüssigen (S5) der Teilmasse unter Hinzugabe der restlichen der mehreren Bestandteile und Vermischen derselben mit der fettarmen Teilmasse zur Bildung einer die Produktmasse darstellenden Gesamtmasse, die zumindest im Wesentlichen den Rezepturgesamtfettgehalt aufweist.

2. Verfahren nach Anspruch 1, wobei beim zweiten Conchieren (S4) ein Trocknungsgas in den Conchierbehälter (12) eingeleitet wird.

3. Verfahren nach Anspruch 2, wobei die fettarme Teilmasse beim ersten Conchieren (S3) in eine Umlaufrichtung umgewälzt wird, und wobei das Trocknungsgas zumindest im Wesentlichen tangential zu der Umlaufrichtung in den Conchierbehälter (12) eingeleitet wird.

4. Verfahren nach Anspruch 2 oder 3, wobei das Trocknungsgas unmittelbar in die fettarme Teilmasse eingeblasen wird.

5. Verfahren nach einem der Ansprüche 2 bis 4, wobei als Trocknungsgas Heißluft verwendet wird.

6. Verfahren nach einem der Ansprüche 1 bis 5, bei dem vor dem ersten Conchieren (S3) der fettarmen Teilmasse eine Zugabe (S2) von wenigstens 0,5 Gew.-% eines polaren Lösungsmittels zu der fettarmen Teilmasse erfolgt.

7. Verfahren nach Anspruch 6, bei dem die fettarme Teilmasse vor dem Zugeben (S2) des polaren Lösungsmittels eine anfängliche relative Feuchtigkeit aufweist, wobei das Zugeben (S2) des polaren Lösungsmittels zu der fettarmen Teilmasse die relative Feuchtigkeit der fettarmen Teilmasse erhöht, und wobei das zweite Conchieren (S4) zu einer Verringerung der relativen Feuchtigkeit der fettarmen Teilmasse auf einen Wert unterhalb der anfänglichen relativen Feuchtigkeit der fettarmen Teilmasse führt.

8. Verfahren nach einem der vorhergehenden Ansprüche, wobei nach der Bildung der Gesamtmasse ein Feinzerkleinern (S6) der Gesamtmasse durchgeführt wird.

9. Verfahren nach Anspruch 8, wobei das Feinzerkleinern (S6) in einer Rührwerkskugelmühle durchgeführt wird.

10. Verfahren nach einem der vorhergehenden Ansprüche, wobei die fettarme Teilmasse beim ersten Conchieren (S3) auf eine Temperatur von wenigstens 55 °C und insbesondere von wenigstens 60 °C erhitzt wird.

11. Verfahren nach einem der vorhergehenden Ansprüche, wobei ein Bestandteil der fettarmen Teilmasse Kristallzucker ist.

12. Verfahren nach einem der vorhergehenden Ansprüche, wobei das erste Conchieren (S3) über einen Zeitraum von wenigstens 0,5 h, insbesondere von wenigstens 1 h, und/oder von höchstens 3 h, insbesondere von höchstens 2 h, durchgeführt wird.

13. Verfahren nach einem der vorhergehenden Ansprüche, wobei die fettarme Teilmasse einen Fettgehalt von wenigstens 5 %, insbesondere von wenigstens 10 %, und/oder von höchstens 25 %, insbesondere von höchstens 20 % aufweist.

14. Verfahren nach einem der vorhergehenden Ansprüche, wobei ein Bestandteil der Produktmasse Kakaomasse ist und wobei während des ersten Conchierens (S3) die fettarme Teilmasse im Wesentlichen frei von Kakaomasse ist.

15. Verfahren nach Anspruch 14, wobei beim Zugeben des weiteren Teils der mehreren Bestandteile zu der fettarmen Teilmasse insbesondere Kakaomasse zugegeben wird.

16. Verfahren nach einem der vorhergehenden Ansprüche, wobei der Rezepturgesamtfettgehalt höchstens 34 %, insbesondere höchstens 30 % und vorteilhaft höchstens 29,5 % beträgt.

## Claims

1. A method for producing a product mass, in particular a chocolate mass, as base mass for food, comprising several constituents and a recipe total fat content, using a conching device (10) comprising a conching container (12), which can be opened and closed in a hermetically sealed manner, comprising the steps of:
filling (S1) the conching container (12) with a low-fat partial mass, which comprises at least a portion of the several constituents, and which has a fat content, which is lower than the recipe total fat content;
first conching (S3) of the low-fat partial mass when the conching container (12) is closed;
adding a further portion of the several constituents to the low-fat partial mass until reaching a fat content in the range of approximately 11 % to approximately 17 %;
second conching (S4) of the low-fat partial mass when the conching container (12) is open, while simultaneously actively drying the low-fat partial mass;
liquefying (S5) the partial mass by adding the remainder of the several constituents, and mixing the latter with the low-fat partial mass by forming a total mass, which represents the product mass and which has at least essentially the recipe total fat content.

2. The method according to claim 1, wherein a drying gas is introduced into the conching container (12) during the second conching (S4).

3. The method according to claim 2, wherein the low-fat partial mass is circulated in a circulating direction during the first conching (S3), and wherein the drying gas is introduced into the conching container (12) at least essentially tangentially to the circulating direction.

4. The method according to claim 2 or 3, wherein the drying gas is blown directly into the low-fat partial mass.

5. The method according to one of claims 2 to 4, wherein hot air is used as drying gas.

6. The method according to one of claims 1 to 5, in the case of which an addition (S2) of at least 0.5 % by weight of a polar solvent to the low-fat partial mass takes place prior to the first conching (S3) of the low-fat partial mass.

7. The method according to claim 6, in the case of which the low-fat partial mass has an initial relative moisture prior to the addition (S2) of the polar solvent, wherein the addition (S2) of the polar solvent to the low-fat partial mass increases the relative moisture of the low-fat partial mass, and wherein the second conching (S4) leads to a reduction of the relative moisture of the low-fat partial mass to a value below the initial relative moisture of the low-fat partial mass.

8. The method according to one of the preceding claims, wherein a fine comminution (S6) of the total mass is carried out after the formation of the total mass.

9. The method according to claim 8, wherein the fine comminution (S6) is carried out in an agitator ball mill.

10. The method according to one of the preceding claims, wherein the low-fat partial mass is heated to a temperature of at least 55°C and in particular of at least 60°C during the first conching (S3).

11. The method according to one of the preceding claims, wherein a constituent of the low-fat partial mass is granulated sugar.

12. The method according to one of the preceding claims, wherein the first conching (S3) is carried out over a time period of at least 0.5 h, in particular of at least 1 h, and/or of maximally 3h, in particular of maximally 2h.

13. The method according to one of the preceding claims, wherein the low-fat partial mass has a fat content of at least 5 %, in particular of at least 10 %, and/or of maximally 25 %, in particular of maximally 20 %.

14. The method according to one of the preceding claims, wherein a constituent of the product mass is cocoa mass, and wherein the low-fat partial mass is essentially free from cocoa mass during the first conching (S3).

15. The method according to claim 14, wherein in particular cacao mass is added during the addition of the further portion of the several constituents to the low-fat partial mass.

16. The method according to one of the preceding claims, wherein the recipe total fat content is maximally 34 %, in particular maximally 30 %, and advantageously maximally 29.5 %.

## Revendications

1. Procédé, destiné à fabriquer une masse de produit, notamment une masse de chocolat, en tant que masse de base pour des produits alimentaires avec plusieurs ingrédients et une teneur totale en graisse de la recette, en utilisant un dispositif de conchage (10) doté d'une cuve de conchage (12), que l'on peut ouvrir et fermer de manière hermétique, comprenant les étapes suivantes consistant à :
remplir (S1) la cuve de conchage (12) d'une masse partielle pauvre en graisse, qui comprend au moins une partie des plusieurs ingrédients et qui présente une teneur en graisse qui est inférieure à la teneur totale en graisse de la recette ;
procéder à un premier conchage (S3) de la masse partielle pauvre en graisse, alors que la cuve de conchage (12) est fermée ;
rajouter à la masse partielle pauvre en graisse une partie supplémentaire des plusieurs ingrédients, jusqu'à l'obtention d'une teneur en graisse de l'ordre d'environ 11 % à environ 17 % ;
procéder à un deuxième conchage (S4) de la masse partielle pauvre en graisse, alors que la cuve de conchage (12) est ouverte, en faisant simultanément sécher activement la masse partielle pauvre en graisse ;
liquéfier (S5) la masse partielle en y rajoutant le reste des plusieurs ingrédients et mélanger ces derniers avec la masse partielle pauvre en graisse, pour créer une masse totale représentant la masse de produit, qui présente au moins majoritairement la teneur totale en graisse de la recette.

2. Procédé selon la revendication 1, lors du deuxième conchage (S4), un gaz de séchage étant introduit dans la cuve de conchage (12).

3. Procédé selon la revendication 2, lors du premier conchage (S3), la masse partielle pauvre en graisse étant brassée dans une direction périphérique et le gaz de séchage étant introduit dans la cuve de conchage (12) au moins de manière majoritairement tangentielle par rapport à la direction périphérique.

4. Procédé selon la revendication 2 ou 3, le gaz de séchage étant séché directement dans la masse partielle pauvre en graisse.

5. Procédé selon l'une quelconque des revendications 2 à 4, de l'air chaud étant utilisé en tant que gaz de séchage.

6. Procédé selon l'une quelconque des revendications 1 à 5, lors duquel avant le premier conchage (S3) de la masse partielle pauvre en graisse, on rajoute (S2) à la masse partielle pauvre en graisse au moins 0,5 % en poids d'un solvant polaire.

7. Procédé selon la revendication 6, lors duquel avant le rajout (S2) du solvant polaire, la masse partielle pauvre en graisse présente une humidité relative initiale, le rajout (S2) du solvant polaire à la masse partielle pauvre en graisse relevant l'humidité relative de la masse partielle pauvre en graisse et le deuxième conchage (S4) menant à une réduction de l'humidité relative de la masse partielle pauvre en graisse à une valeur inférieure à l'humidité relative initiale de la masse partielle pauvre en graisse.

8. Procédé selon l'une quelconque des revendications précédentes, après la création de la masse totale, un broyage fin (S6) de la masse totale étant réalisé.

9. Procédé selon la revendication 8, le broyage fin (S6) étant réalisé dans un broyeur-agitateur à billes.

10. Procédé selon l'une quelconque des revendications précédentes, lors du premier conchage (S3), la masse partielle pauvre en graisse étant chauffée à une température d'au moins 55 °C et notamment d'au moins 60 °C.

11. Procédé selon l'une quelconque des revendications précédentes, ingrédient de la masse partielle pauvre en graisse étant du sucre cristallisé.

12. Procédé selon l'une quelconque des revendications précédentes, le premier conchage (S3) étant réalisé sur une période d'au moins 0,5 h, notamment d'au moins 1 h, et/ou d'au plus 3 h, notamment d'au plus 2 h.

13. Procédé selon l'une quelconque des revendications précédentes, la masse partielle pauvre en graisse présentant une teneur en graisse d'au moins 5 %, notamment d'au moins 10 %, et/ou d'au plus 25 %, notamment d'au plus 20 %.

14. Procédé selon l'une quelconque des revendications précédentes, un ingrédient de la masse de produit étant une masse de cacao et pendant le premier conchage (S3) la masse partielle pauvre en graisse étant sensiblement exempte de masse de cacao.

15. Procédé selon la revendication 14, lors de l'ajout à la masse partielle pauvre en graisse de la partie supplémentaire des plusieurs ingrédients, notamment de la masse de cacao étant rajoutée.

16. Procédé selon l'une quelconque des revendications précédentes, la teneur totale en graisse de la recette s'élevant au plus à 34 %, notamment au plus à 30 % et avantageusement, au plus à 29,5 %.
